# EUROPÄISCHE PATENTANMELDUNG

(11) **EP 4 621 362 A1**
(43) Veröffentlichungstag der Anmeldung: **24.09.2025**
(21) Anmeldenummer: 24164852.6
(22) Anmeldetag: 20.03.2024
(51) Int. Cl.: G01G 3/14, G01L 1/22

(54) **WÄGEZELLE**

(71) Anmelder: Bizerba SE & Co. KG, 72336 Balingen (DE)
(72) Erfinder: Grémillot, Anthony, 72336 Balingen (DE); Paul, Jonas, 72411 Bodelshausen (DE)
(74) Vertreter: Manitz Finsterwald Patent- und Rechtsanwaltspartnerschaft mbB

(57) **Zusammenfassung**

Die Erfindung betrifft eine Wägezelle für eine Waage, mit einem Federkörper, mehreren auf dem Federkörper aufgebrachten, zu einer Wheatstone-Messbrücke oder als Teil hiervon verschalteten Dehnungsmesstreifen zur Erzeugung eines einem einwirkenden Gewicht entsprechenden Gewichtsmesssignals, einer Abdeckschicht für die Dehnungsmessstreifen als mechanischer Schutz, und einem Messaufnehmer zur Kompensation einer Luftfeuchtigkeitsabhängigkeit des von den Dehnungsmessstreifen erzeugten Gewichtsmesssignals, wobei die Abdeckschicht sowohl die Dehnungsmessstreifen als auch den Messaufnehmer abdeckt.

## Beschreibung

Die Erfindung betrifft eine Wägezelle für eine Waage, mit einem Federkörper, mehreren auf dem Federkörper aufgebrachten, zu einer Wheatstone-Messbrücke oder als Teil hiervon verschalteten Dehnungsmesstreifen zur Erzeugung eines einem einwirkenden Gewicht entsprechenden Gewichtsmesssignals und einem insbesondere auf dem Federkörper aufgebrachten Messaufnehmer zur Kompensation einer Luftfeuchtigkeitsabhängigkeit des von den Dehnungsmessstreifen erzeugten Gewichtsmesssignals.

Es ist aus dem Stand der Technik bekannt, dass das Gewichtsmesssignal der Dehnungsmesstreifen abhängig von der Luftfeuchtigkeit ist. Um ein luftfeuchtigkeitskompensiertes Gewicht berechnen, kommt in dem Dokument DE 44 02 655 C1 ein Messaufnehmer zum Einsatz, der das Gewichtsmesssignal so beeinflusst, dass die Luftfeuchtigkeitsabhängigkeit der Wägezelle korrigiert wird.

Allerdings ist in dem Dokument DE 44 02 655 C1 der Messaufnehmer auf einer von den Dehnungsmessstreifen entfernt angeordneten Oberfläche aufgeklebt. Es besteht daher die Gefahr, dass die Luftfeuchtigkeit am Ort des Messaufnehmers von der Luftfeuchtigkeit am Ort der Dehnungsmessstreifen verschieden ist, so dass die Genauigkeit der Luftfeuchtigkeitskompensation sinkt. Wenn darüber hinaus die Dehnungsmessstreifen als mechanischen Schutz noch eine Abdeckschicht aufweisen, die jedoch die Feuchtigkeitsverhältnisse an den Dehnungsmessstreifen beeinflusst, wird die Genauigkeit der Luftfeuchtigkeitskompensation weiter verringert.

Der Erfindung liegt die Aufgabe zugrunde, eine Wägezelle eingangs genannter Art anzugeben, die eine möglichst genaue Kompensation der Luftfeuchtigkeitsabhängigkeit des von den Dehnungsmessstreifen erzeugten Gewichtsmesssignals erlaubt.

Diese Aufgabe wird durch eine Wägezelle mit den Merkmalen des Anspruchs 1 gelöst, und insbesondere dadurch, dass die Abdeckschicht sowohl die Dehnungsmessstreifen als auch den Messaufnehmer abdeckt.

Erfindungsgemäß werden nicht nur die Dehnungsmessstreifen, sondern es wird auch der Messaufnehmer von der Abdeckschicht abgedeckt. Es liegt somit eine gemeinsame Abdeckschicht vor. Dadurch wird einerseits gewährleistet, dass sich der Messaufnehmer in unmittelbarer Nähe zu den Dehnungsmessstreifen befindet, und andererseits finden der Messaufnehmer und die Dehnungsmessstreifen unterhalb der Abdeckschicht auch dieselben Feuchtigkeitsverhältnisse vor. Die Luftfeuchtigkeitsabhängigkeit des von den Dehnungsmessstreifen erzeugten Gewichtsmesssignals kann dadurch besonders genau kompensiert werden. Bei der Abdeckschicht handelt es sich beispielsweise um eine Kunststofffolie, einen Polyurethan-Lack oder ein Silikonharz. Darüber hinaus bietet die Abdeckschicht an sich auch einen gewissen Schutz vor bzw. gegen das Eindringen von Luftfeuchtigkeit, so dass eine Verfälschung des Gewichtsmesssignals durch den Einfluss von Luftfeuchtigkeit von vorne herein geringer ausfällt. Insbesondere kann durch die Abdeckschicht verhindert werden, dass eine vorübergehende Erhöhung der Luftfeuchtigkeit zu einer Verfälschung des Gewichtsmesssignals führt.

Üblicherweise umfassen die Dehnungsmessstreifen insbesondere mäanderförmige Messgitter aus Widerstandsdraht. Vorzugsweise ist vorgesehen, dass die Messgitter und der Messaufnehmer oder zumindest ein Teil hiervon, insbesondere eine Elektrode im Falle eines kapazitiven Messaufnehmers, aus demselben Material gefertigt sind. Da sie aus demselben Material bestehen, reagieren die Messgitter und der Messaufnehmer auch gleich auf die auf sie einwirkende Feuchtigkeit, so dass die Genauigkeit der Kompensation der Luftfeuchtigkeitsabhängigkeit des Gewichtsmesssignals weiter verbessert werden kann. Bei dem Material kann es sich beispielsweise um Konstantan oder NiCr-Verbindungen handeln.

Nach einer bevorzugten Ausführungsform sind die Dehnungsmessstreifen als Folien-Dehnungsmesstreifen mit einer gemeinsamen oder jeweils einer eigenen Trägerfolie ausgebildet, auf der oder den die Messgitter aufgebracht sind. Dehnungsmessstreifen mit Trägerfolie bzw. Trägerfolien sind leicht auf dem Federkörper aufbringbar. Die gemeinsame oder jeweilige Trägerfolie kann beispielsweise aus Polyimid hergestellt und/oder mittels einer Klebstoffschicht auf den Federkörper aufgeklebt sein. Bei Verwendung einer gemeinsamen Trägerfolie sind die Messgitter besonders gut handhabbar. Ohne Trägerfolie bzw. Trägerfolien können die Dehnungsmessstreifen beispielsweise unter Zwischenschaltung einer z.B. keramischen Isolationsschicht auf den Federkörper gesputtert werden.

Vorzugsweise ist der Messaufnehmer oder zumindest der Teil hiervon, insbesondere eine Elektrode im Falle eines kapazitiven Messaufnehmers, auf der gemeinsamen oder einer eigenen Trägerfolie aufgebracht. Es gelten für den Messaufnehmer oder zumindest den Teil hiervon dann dieselben vorstehenden Ausführungen wie für die Dehnungsmessstreifen.

Nach einer weiteren bevorzugten Ausführungsform sind die Messgitter und der Messaufnehmer oder zumindest der Teil hiervon, insbesondere eine Elektrode im Falle eines kapazitiven Messaufnehmers, durch Ätzen einer auf der Trägerfolie aufgebrachten Metallschicht hergestellt. Somit entstehen für die Herstellung des Messaufnehmers keine oder kaum Mehrkosten, da die Herstellung des Messaufnehmers in die Herstellung der Dehnungsmessstreifen integriert ist. Der Messaufnehmer entsteht direkt beim Ätzen der Dehnungsmessstreifen.

Alternativ kann der Messaufnehmer als ein diskretes Bauelement ausgebildet sein. Es existiert ein breites Spektrum an verfügbaren Feuchtigkeitsmessaufnehmern für verschiedenste Anforderungen als Zukaufteil. Diskrete Bauteile können kompakt und kostengünstig sein.

Es können vier Dehnungsmessstreifen vorgesehen sein, wobei bevorzugt vorgesehen ist, dass zwei Dehnungsmessstreifen auf einer Seite des Messaufnehmers und zwei Dehnungsmessstreifen auf einer hierzu gegenüberliegenden Seite des Messaufnehmers angeordnet sind. Mit anderen Worten kann sich der Messaufnehmer in der Mitte einer entsprechenden Anordnung von vier Dehnungsmessstreifen befinden. Hierdurch kann gewährleistet werden, dass sich der Messaufnehmer in unmittelbarer Nähe zu den Dehnungsmessstreifen befindet.

Der Messaufnehmer kann als ein resistiver Messaufnehmer oder als ein kapazitiver Messaufnehmer ausgebildet sein. Bei einem resistiven Feuchtigkeitsmessaufnehmer ändert sich die elektrische Leitfähigkeit bzw. der spezifische Widerstand in Abhängigkeit von der Feuchtigkeit, bei einem kapazitiven Feuchtigkeitsmessaufnehmer ändert sich die Dielektrizitätskonstante.

Beispielsweise kann der als kapazitiver Messaufnehmer ausgebildete Messaufnehmer zwei Elektroden umfassen, die beide auf der Trägerfolie aufgebracht sind, wobei die beiden Elektroden jeweils nach Art eines Rechens ausgebildet sind und/oder kämmend ineinandergreifen. Durch das Vergrößern der Oberfläche der Elektroden kann die Kapazität und damit die Messgenauigkeit des Messaufnehmers erhöht werden.

Gemäß einer anderen Ausbildung kann der Messaufnehmer zwei Elektroden umfassen, wobei die eine Elektrode, insbesondere flächig, auf der Trägerfolie aufgebracht ist und die andere Elektrode durch den Federkörper gebildet ist, wobei die beiden Elektroden durch die Trägerfolie und eine Klebstoffschicht, über die die Trägerfolie auf dem Federkörper angebracht ist, voneinander getrennt sind. In diesem Fall können der bereits vorhandene Federkörper und die bereits vorhandene Trägerfolie und die bereits vorhandene Klebstoffschicht vorteilhaft als Elektrode und als Dielektrikum genutzt werden.

Vorzugsweise kann vorgesehen sein, dass der Messaufnehmer als ein Feuchtigkeitssensor zur Erzeugung eines einer Luftfeuchtigkeit entsprechenden Luftfeuchtigkeitsmesssignals ausgebildet ist, wobei eine Auswerteeinheit zur Berechnung eines luftfeuchtigkeitskompensierten Gewichts aus dem von den Dehnungsmessstreifen erzeugten Gewichtsmesssignal und dem von dem Feuchtigkeitssensor erzeugten Luftfeuchtigkeitsmesssignal vorgesehen ist. In diesem Fall werden ein Gewichtsmesssignal und ein Luftfeuchtigkeitsmesssignal durch zwei separate Einrichtungen getrennt voneinander erzeugt und anschließend wird aus diesen beiden Messsignalen ein luftfeuchtigkeitskompensiertes Gewicht berechnet. Grundsätzlich ist es auch möglich, den Messaufnehmer schaltungstechnisch in die Wheatstone-Brücke zu integrieren. Bei separaten Einrichtungen ist eine Kalibrierung jedoch einfacher.

Darüber hinaus kann ein Temperatursensor zur Erzeugung eines einer Temperatur der Wägezelle entsprechenden Temperaturmesssignals vorgesehen sein, wobei die Auswerteeinheit dazu ausgebildet ist, basierend auf dem von dem Temperatursensor erzeugten Temperaturmesssignal zusätzlich eine Temperaturkompensation des von den Dehnungsmessstreifen erzeugten Gewichtsmesssignals vorzunehmen, so dass Verfälschungen des Gewichtsmesssignals durch Temperatureffekte vermieden bzw. zumindest verringert werden können.

Die Auswerteeinheit kann dann eine Kalibriermatrix in Form einer Lookup-Tabelle umfassen, in der für verschiedene Luftfeuchtigkeitswerte Temperaturwert-Reihen und/oder für verschiedene Temperaturwerte Luftfeuchtigkeits-Reihen hinterlegt sind, um aus dem von den Dehnungsmessstreifen erzeugten Gewichtsmesssignal ein luftfeuchtigkeits- und temperaturkompensiertes Gewicht zu berechnen. Damit können aufwändige Berechnungen vermieden werden.

Darüber hinaus betrifft die Erfindung eine Waage mit einer Wägezelle, wie sie vorstehend beschrieben ist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen, jeweils in schematischer Darstellung,
- Fig. 1: eine erfindungsgemäße Wägezelle,
- Fig. 2: eine Wheatstone-Brücke und einen Feuchtigkeitssensor gemäß einer ersten Art, und
- Fig. 3: die Wheatstone-Brücke aus Fig. 2 mit einem Feuchtigkeitssensor gemäß einer zweiten Art.

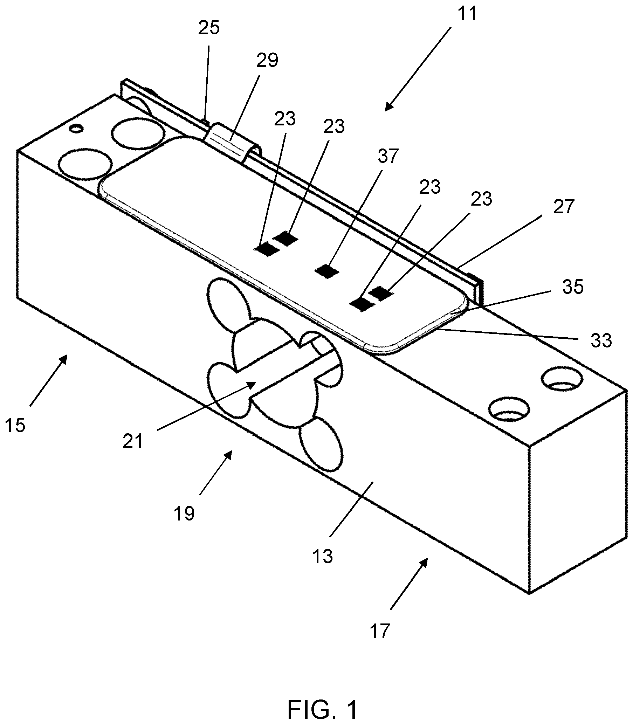

In Fig. 1 ist eine Wägezelle 11 einer ansonsten nicht dargestellten Waage mit einem Federkörper 13 gezeigt, der als Doppelbiegebalken aus z.B. Aluminium oder Edelstahl gefertigt ist. Der Federkörper 13 umfasst einen Kraftaufnahmeabschnitt 15 und einen Krafteinleitungsabschnitt 17. An dem Kraftaufnahmeabschnitt 15 ist der Federkörper 13 fest eingespannt, an dem Krafteinleitungsabschnitt 17 ist der Federkörper 13 mit einer nicht dargestellten Lastplatte verbunden. Zwischen den beiden Abschnitten 15 und 17 ist ein Verformungsabschnitt 19 vorgesehen, in dem eine Öffnung 21 ausgebildet ist, die den Federkörper 13 vollständig durchdringt. Eine Last auf dem Krafteinleitungsabschnitt 17 führt zu einer hierzu proportionalen Auslenkung bzw. Verbiegung des Federkörpers 13.

Oberhalb der Öffnung 21 sind an der Außenseite des Federkörpers 13 vier Dehnungsmessstreifen (DMS) 23 angebracht, die zu einer Wheatstone-Brücke verschaltet sind und eine Verformung des Federkörpers 13 im Bereich des Verformungsabschnitts 19 detektieren, wobei ein dem einwirkenden Gewicht entsprechendes Gewichtsmesssignal erzeugt wird. Bei der Wägezelle 11 handelt es sich daher um eine DMS-Wägezelle. Die Verschaltung der Dehnungsmessstreifen 23 als Wheatstone-Brücke sowie Anschlusspads für die Dehnungsmessstreifen 23 sind nicht dargestellt. Eine Auswerteeinheit 25, mit der das Gewichtmesssignal der Wheatstone-Brücke 23 als Brückenspannung ausgewertet wird, befindet sich auf einer Platine 27, die im Bereich des Kraftaufnahmeabschnitts 15 an der Rückseite des Federkörpers 13 angebracht ist. Die elektrische Verbindung zwischen den Dehnungsmessstreifen 23 und der Platine 27 erfolgt über ein Flachbandkabel 29.

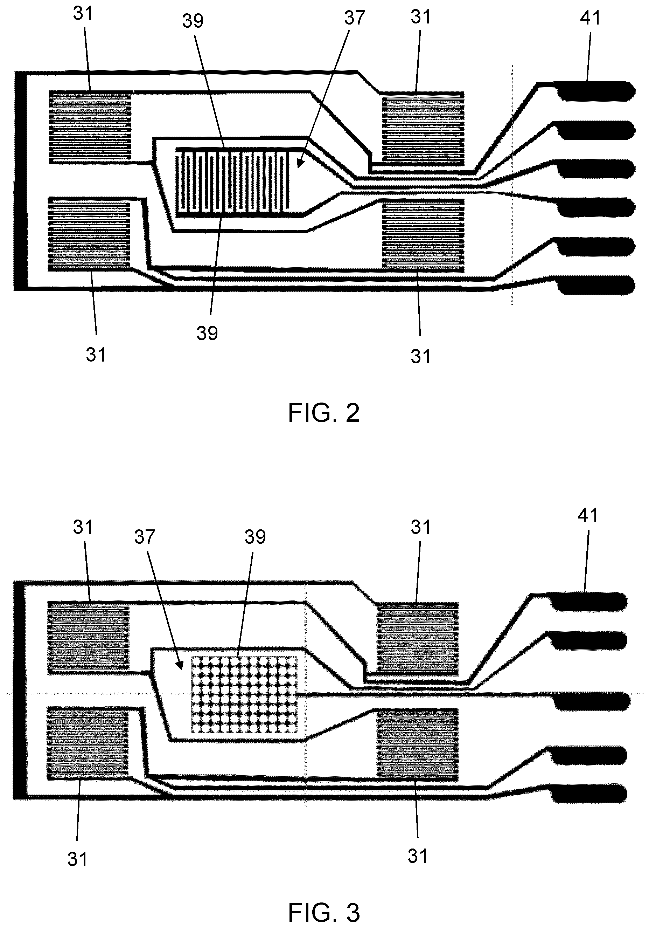

Bei den Dehnungsmessstreifen 23 handelt es sich um Folien-Dehnungsmesstreifen 23, die jeweils ein Messgitter 31 aus Widerstandsdraht aufweisen (vgl. die Figuren 2 und 3), die auf einer gemeinsamen Trägerfolie 33 aufgebracht sind. Darüber hinaus sind die Dehnungsmessstreifen 23 mit einer Abdeckschicht 35 abgedeckt, um einen mechanischen Schutz der Dehnungsmessstreifen 23 zu gewährleisten.

Neben den Dehnungsmessstreifen 23 ist auf der Trägerfolie 33 und unterhalb der Abdeckschicht 35 zusätzlich auch ein Messaufnehmer 37 in Form eines Feuchtigkeitssensors (vgl. Fig. 2) oder eines Teils hiervon (vgl. Fig. 3) vorgesehen, der schaltungstechnisch separat von der durch die Dehnungsmessstreifen 23 gebildeten Wheatstone-Brücke ausgebildet und ebenfalls mit der Auswerteinheit 25 elektrisch verbunden ist. Der Messaufnehmer 37 ist dazu ausgebildet, ein einer Luftfeuchtigkeit entsprechenden Luftfeuchtigkeitsmesssignals zu erzeugen. Die Auswerteinheit 25 kann dann aus dem von den Dehnungsmessstreifen 23 erzeugten Gewichtsmesssignal und dem von dem Messaufnehmer 37 erzeugten Luftfeuchtigkeitsmesssignal ein luftfeuchtigkeitskompensiertes Gewicht berechnen. Dies ist deshalb erforderlich, da das Gewichtsmesssignal der Dehnungsmesstreifen 23 abhängig von der Luftfeuchtigkeit ist.

Fig. 2 zeigt die Dehnungsmessstreifen 23 und den Messaufnehmer 37 gemäß Fig. 1 in einer ersten Ausführungsform. Die Dehnungsmessstreifen 23 sind ohne die Trägerfolie 33 dargestellt, d.h. es sind nur die Messgitter 31 erkennbar. Dabei befinden sich zwei Dehnungsmessstreifen 23 bzw. Messgitter 31 auf einer Seite des Messaufnehmers 37, und zwei Dehnungsmessstreifen 23 bzw. Messgitter 31 befinden auf einer hierzu gegenüberliegenden Seite des Messaufnehmers 37. Der Messaufnehmer 37 ist gewissermaßen mittig zwischen den Dehnungsmessstreifen 23 bzw. Messgittern 31 angeordnet. Bei dem Messaufnehmer 37 handelt es sich um einen kapazitiven Messaufnehmer, der zwei Elektroden 39 umfasst, die auf der Trägerfolie 33 aufgebracht sind und jeweils eine Rechenform aufweisen und kämmend ineinandergreifen. Der Messaufnehmer 37 und die Dehnungsmessstreifen 23 sind durch Ätzen einer auf der Trägerfolie 33 aufgebrachten Metallschicht hergestellt und damit aus demselben Material gefertigt. Für die vier Dehnungsmessstreifen 23 der Wheatstone-Brücke sind vier Anschlusspads 41 vorgesehen, und für die beiden Elektroden 39 des Messaufnehmers 33 sind zwei Anschlusspads 41 vorgesehen, wobei der Übersichtlichkeit halber lediglich ein Anschlusspad 41 mit einem Bezugszeichen versehen.

In einer zweiten Ausführungsform gemäß Fig. 3 ist der Messaufnehmer 37 ebenfalls ein kapazitiver Messaufnehmer, wobei im Unterschied zu der Ausführungsform gemäß Fig. 2 lediglich eine Elektrode 39 auf der Trägerfolie 33 aufgebracht ist, wobei die Elektrode 39 nicht rechenförmig, sondern flächig ausgebildet ist. Die andere Elektrode 39 wird durch den Federkörper 13 gebildet. Dabei bilden die Trägerfolie 33 und eine nicht dargestellte Klebstoffschicht, über die die Trägerfolie 33 auf dem Festkörper 13 angebracht ist, ein Dielektrikum des als kapazitiver Messaufnehmer ausgebildeten Messaufnehmers 37.

Grundsätzlich kann der Messaufnehmer 37 auch als ein resistiver Messaufnehmer und/oder als ein diskretes Bauelement ausgebildet sein.

Darüber hinaus kann ein nicht dargestellter Temperatursensor vorgesehen sein, der dazu ausgebildet ist, ein einer Temperatur der Wägezelle 11 entsprechendes Temperaturmesssignal zu erzeugen. Die Auswerteeinheit 25 ist dann dazu ausgebildet, mit Hilfe des Temperaturmesssignals zusätzlich eine Temperaturkompensation des von den Dehnungsmessstreifen 23 erzeugten Gewichtsmesssignals vorzunehmen. In der Auswerteeinheit 25 ist in diesem Fall eine Kalibriermatrix in Form einer Lookup-Tabelle hinterlegt, in der für jede hinterlegte Kombination eines Luftfeuchtigkeitswerts und eines Temperaturwerts ein Kompensationswert angegeben ist, um den das von den Dehnungsmessstreifen 23 erzeugte Gewichtsmesssignal korrigiert werden muss.

### Bezugszeichenliste

- 11: Wägezelle
- 13: Federkörper
- 15: Kraftaufnahmeabschnitt
- 17: Krafteinleitungsabschnitt
- 19: Verformungsabschnitt
- 21: Öffnung
- 23: Dehnungsmessstreifen
- 25: Auswerteeinheit
- 27: Platine
- 29: Flachbandkabel
- 31: Messgitter
- 33: Trägerfolie
- 35: Abdeckschicht
- 37: Messaufnehmer
- 39: Elektrode
- 41: Anschlusspad

## Patentansprüche

1. Wägezelle für eine Waage, mit
einem Federkörper (13),
mehreren auf dem Federkörper (13) aufgebrachten, zu einer Wheatstone-Messbrücke oder als Teil hiervon verschalteten Dehnungsmesstreifen (23) zur Erzeugung eines einem einwirkenden Gewicht entsprechenden Gewichtsmesssignals,
einer Abdeckschicht (35) für die Dehnungsmessstreifen (23) als mechanischer Schutz, und
einem Messaufnehmer (37) zur Kompensation einer Luftfeuchtigkeitsabhängigkeit des von den Dehnungsmessstreifen (23) erzeugten Gewichtsmesssignals,
wobei die Abdeckschicht (35) sowohl die Dehnungsmessstreifen (23) als auch den Messaufnehmer (37) abdeckt.

2. Wägezelle nach Anspruch 1,
**dadurch gekennzeichnet,**
**dass** die Dehnungsmessstreifen (23) insbesondere mäanderförmige Messgitter (31) aus Widerstandsdraht umfassen, wobei bevorzugt vorgesehen ist, dass die Messgitter (31) und der Messaufnehmer (37) oder zumindest ein Teil hiervon, insbesondere eine Elektrode (39), aus demselben Material gefertigt sind.

3. Wägezelle nach Anspruch 2,
**dadurch gekennzeichnet,**
**dass** die Dehnungsmessstreifen (23) als Folien-Dehnungsmesstreifen mit einer gemeinsamen oder jeweils einer eigenen Trägerfolie (33) ausgebildet sind, auf der oder den die Messgitter (31) aufgebracht sind.

4. Wägezelle nach Anspruch 3,
**dadurch gekennzeichnet,**
**dass** der Messaufnehmer (37) oder zumindest der Teil hiervon, insbesondere eine Elektrode (39), auf der gemeinsamen oder einer eigenen Trägerfolie (33) aufgebracht ist.

5. Wägezelle nach Anspruch 3 oder 4,
**dadurch gekennzeichnet,**
**dass** die Messgitter (31) und der Messaufnehmer (37) oder zumindest der Teil hiervon, insbesondere eine Elektrode (39), durch Ätzen einer auf der Trägerfolie (33) aufgebrachten Metallschicht hergestellt sind.

6. Wägezelle nach Anspruch 1 oder 2,
**dadurch gekennzeichnet,**
**dass** der Messaufnehmer (37) als ein diskretes Bauelement ausgebildet ist.

7. Wägezelle nach einem der vorstehenden Ansprüche,
**dadurch gekennzeichnet,**
**dass** vier Dehnungsmessstreifen (23) vorgesehen sind, wobei bevorzugt vorgesehen ist, dass zwei Dehnungsmessstreifen (23) auf einer Seite des Messaufnehmers (37) und zwei Dehnungsmessstreifen (23) auf einer hierzu gegenüberliegenden Seite des Messaufnehmers (37) angeordnet sind.

8. Wägezelle nach einem der vorstehenden Ansprüche,
**dadurch gekennzeichnet,**
**dass** der Messaufnehmer (37) als ein resistiver Messaufnehmer oder als ein kapazitiver Messaufnehmer ausgebildet ist.

9. Wägezelle nach Anspruch 8 und Anspruch 3,
**dadurch gekennzeichnet,**
**dass** der als kapazitiver Messaufnehmer ausgebildete Messaufnehmer (37) zwei Elektroden (39) umfasst, die beide auf der Trägerfolie (33) aufgebracht sind, wobei die beiden Elektroden (39) jeweils nach Art eines Rechens ausgebildet sind und/oder kämmend ineinandergreifen.

10. Wägezelle nach Anspruch 8 und Anspruch 3,
**dadurch gekennzeichnet,**
**dass** der als kapazitiver Messaufnehmer ausgebildete Messaufnehmer (37) zwei Elektroden (39) umfasst, wobei die eine Elektrode (39), insbesondere flächig, auf der Trägerfolie (33) aufgebracht ist und die andere Elektrode (39) durch den Federkörper (13) gebildet ist, wobei die beiden Elektroden (39) durch die Trägerfolie (33) und eine Klebstoffschicht, über die die Trägerfolie (33) auf dem Federkörper (13) angebracht ist, voneinander getrennt sind.

11. Wägezelle nach einem der vorstehenden Ansprüche,
**dadurch gekennzeichnet,**
**dass** der Messaufnehmer (37) als ein Feuchtigkeitssensor zur Erzeugung eines einer Luftfeuchtigkeit entsprechenden Luftfeuchtigkeitsmesssignals ausgebildet ist, wobei eine Auswerteeinheit (25) zur Berechnung eines luftfeuchtigkeitskompensierten Gewichts aus dem von den Dehnungsmessstreifen (23) erzeugten Gewichtsmesssignal und dem von dem Feuchtigkeitssensor erzeugten Luftfeuchtigkeitsmesssignal vorgesehen ist.

12. Wägezelle nach einem der vorstehenden Ansprüche,
**dadurch gekennzeichnet,**
**dass** ein Temperatursensor zur Erzeugung eines einer Temperatur der Wägezelle (11) entsprechenden Temperaturmesssignals vorgesehen ist, wobei die Auswerteeinheit (25) dazu ausgebildet ist, basierend auf dem von dem Temperatursensor erzeugten Temperaturmesssignal zusätzlich eine Temperaturkompensation des von den Dehnungsmessstreifen (23) erzeugten Gewichtsmesssignals vorzunehmen.

13. Wägezelle nach Anspruch 12,
**dadurch gekennzeichnet,**
**dass** die Auswerteeinheit (25) eine Kalibriermatrix in Form einer Lookup-Tabelle umfasst, in der für verschiedene Luftfeuchtigkeitswerte Temperaturwert-Reihen und/oder für verschiedene Temperaturwerte Luftfeuchtigkeits-Reihen hinterlegt sind, um aus dem von den Dehnungsmessstreifen (23) erzeugten Gewichtsmesssignal ein luftfeuchtigkeits- und temperaturkompensiertes Gewicht zu berechnen.

14. Waage mit einer Wägezelle (11) nach einem der vorstehenden Ansprüche.
